# EUROPEAN PATENT APPLICATION

(11) **EP 4 559 730 A1**
(43) Date of publication of application: **28.05.2025**
(21) Application number: 24159729.3
(22) Date of filing: 26.02.2024
(51) Int. Cl.: B60L 53/16, H01R 13/62

(54) **MAGNETIC LOCK FOR CHARGING ELECTRIC VEHICLE AND OPERATING METHOD THEREOF**

(30) Priority: 22.11.2023 TW 112145120
(71) Applicant: Wistron Corporation, New Taipei City 22181 (TW)
(72) Inventor: CHIEN, Hsiao Wei, 22181 New Taipei City (TW); PAN, Chien Ming, 22181 New Taipei City (TW); PENG, Ying-Hao, 22181 New Taipei City (TW); HUANG, Cheng-Wei, 22181 New Taipei City (TW); CHEN, Wen Ju, 22181 New Taipei City (TW)
(74) Representative: Becker, Eberhard

(57) **Abstract**

A magnetic lock (100, 200, 300) for charging an electric vehicle (EV) and an operating method (S110) of the magnetic lock (100, 200, 300) are provided. The magnetic lock (100, 200, 300) includes a voltage conversion circuit (110, 210, 310), a detection circuit (120, 420), and a magnetic attraction circuit (130, 430). The voltage conversion circuit (110, 210, 310) converts a first voltage (V1) from a power supplying connector (10) into a second voltage (V2) and a third voltage (V3). The detection circuit (120, 420) is driven by the second voltage (V2), provides one of a first control signal (SC1) and a second control signal (SC2) according to different status of the power supplying connector (10). The magnetic attraction circuit (130, 430) uses the third voltage (V3) to generate a magnetic attraction force (FMA) for fixing the electric vehicle (EV) according to the first control signal (SC1).

## Description

### BACKGROUND

### Technical Field

The disclosure relates to a magnetic lock and an operating method of the magnetic lock, and in particular, to a magnetic lock for charging an electric vehicle and an operating method of the magnetic lock.

### Description of Related Art

At present, electric vehicles are becoming popular. Electric vehicles can be charged through a power supplying connector (or charging gun). The user cannot easily know whether charging is completed. It should be noted that during the charging process of the electric vehicle, when the power supplying connector is forcibly removed, the charging port of the electric vehicle is ablated. In a mild case, an oxide layer is formed around the charging port, which causes poor contact at the charging port and prolongs the charging time. In a serious case, the charging port is damaged, which makes the electric vehicle unable to charge.

It may be seen from this that how to prevent the power supplying connector from being removed during the process of charging the electric vehicle is one of the research focuses of persons skilled in the art.

### SUMMARY

The disclosure provides a magnetic lock for charging an electric vehicle and an operating method of the magnetic lock, which can prevent the power supplying connector from being removed during the process of charging the electric vehicle.

A magnetic lock according to an embodiment of the disclosure includes a voltage conversion circuit, a detection circuit, and a magnetic attraction circuit. The voltage conversion circuit receives the first voltage from the power supplying connector and converts the first voltage into a second voltage and a third voltage. The detection circuit is coupled to the voltage conversion circuit and the power supplying connector. The detection circuit is driven according to the second voltage, provides the first control signal according to the first status signal from the power supplying connector, and provides the second control signal according to the second status signal from the power supplying connector. The magnetic attraction circuit is coupled to the voltage conversion circuit and detection circuit. The magnetic attraction circuit uses the third voltage to generate a magnetic attraction force according to the first control signal, and stops generating the magnetic attraction force according to the second control signal. The power supplying connector is fixed to a charging port of the electric vehicle by the magnetic attraction force.

The operating method according to an embodiment of the disclosure is used for the magnetic lock. The magnetic lock includes a detection circuit and a magnetic attraction circuit. The operating method includes the following. The first voltage from the power supplying connector is received and the first voltage is converted into the second voltage and the third voltage. The detection circuit is driven according to the second voltage. The first control signal is provided according to the first status signal from the power supplying connector by the detection circuit and the second control signal is provided according to the second status signal from the power supplying connector. The magnetic attraction force is generated according to the first control signal using the third voltage by the magnetic attraction circuit so that the power supplying connector is fixed to the charging port of the electric vehicle. The generating of the magnetic attraction force is stopped according to the second control signal by the magnetic attraction circuit.

Based on the above, the magnetic lock provides the first control signal according to the first status signal from the power supplying connector, and uses the third voltage to generate the magnetic attraction force according to the first control signal. The power supplying connector is fixed to the charging port of the electric vehicle by the magnetic attraction force. The magnetic lock responds to the status signal from the power supplying connector to determine whether to provide the magnetic attraction force. In this way, the magnetic lock may prevent the power supplying connector from being removed during the process of charging the electric vehicle, thereby the risk of the charging port of the electric vehicle being damaged by the charging power is reduced.

### BRIEF DESCRIPTION OF THE DRAWINGS

FIG. 1 is a schematic diagram of a magnetic lock according to an embodiment of the disclosure.
FIG. 2 is a flow chart of an operating method according to an embodiment of the disclosure.
FIG. 3 is a schematic diagram of the magnetic lock according to an embodiment of the disclosure.
FIG. 4 is a schematic diagram of the magnetic lock according to an embodiment of the disclosure.
FIG. 5 is a schematic diagram of a detection circuit and a magnetic attraction circuit according to an embodiment of the disclosure.
FIG. 6 is a waveform diagram of a first input signal according to an embodiment of the disclosure.
FIG. 7 is a flow chart of operations according to an embodiment of the disclosure.

### DESCRIPTION OF THE EMBODIMENTS

Some embodiments of the disclosure will be described in detail with reference to the accompanying drawings. The reference numerals cited in the following description will be regarded as the same or similar components when the same reference numerals appear in different drawings. The embodiments are merely part of the disclosure and do not disclose all possible implementations of the disclosure. Rather, the embodiments are merely examples within the scope of the appended claims of the disclosure.

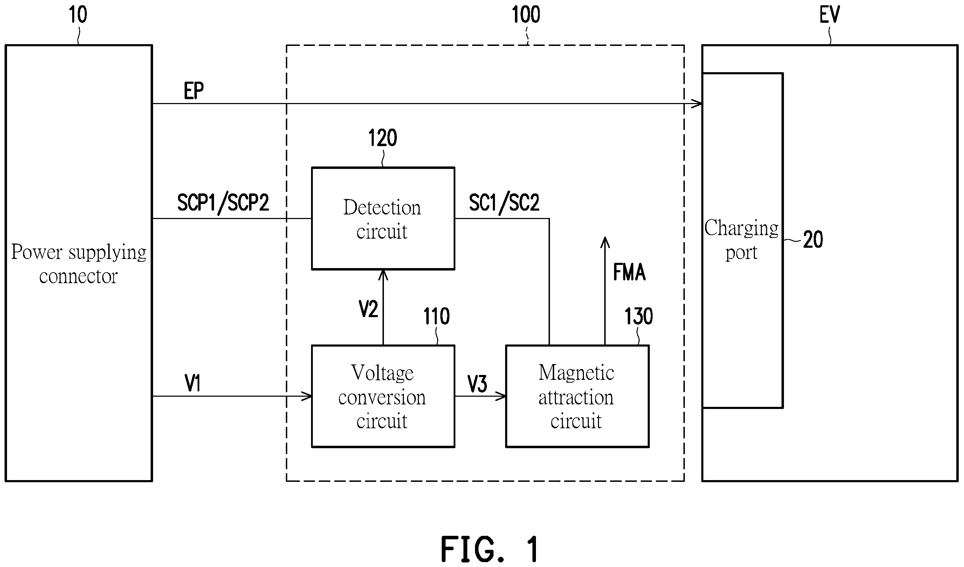

Please refer to FIG. 1. FIG. 1 is a schematic diagram of a magnetic lock according to an embodiment of the disclosure. In an embodiment, a magnetic lock 100 includes a voltage conversion circuit 110, a detection circuit 120, and a magnetic attraction circuit 130. The voltage conversion circuit 110 receives a first voltage V1 from a power supplying connector 10. The voltage conversion circuit 110 converts the first voltage V1 into a second voltage V2 and a third voltage V3. In an embodiment, the power supplying connector 10 may be a charging gun connected to a charging pile (not illustrated), or the power supplying connector 10 may be a charging gun of the charging pile, and the charging gun of the charging pile may also include the magnetic lock 100, that is, the charging gun of the charging pile and the magnetic lock 100 may be integrated into one body, but the disclosure is not limited thereto.

In an embodiment, the detection circuit 120 is coupled to the voltage conversion circuit 110 and the power supplying connector 10. The detection circuit 120 is driven according to the second voltage V2. The detection circuit 120 provides a first control signal SC1 according to a first status signal SCP1 from the power supplying connector 10, and provides a second control signal SC2 according to a second status signal SCP2 from the power supplying connector 10.

In an embodiment, the magnetic attraction circuit 130 is coupled to the voltage conversion circuit 110 and the detection circuit 120. The magnetic attraction circuit 130 uses the third voltage V3 to generate a magnetic attraction force FMA according to the first control signal SC1. Therefore, the power supplying connector 10 is fixed to a charging port 20 of an electric vehicle EV by the magnetic attraction force FMA.

In addition, the magnetic attraction circuit 130 also stops generating the magnetic attraction force FMA according to the second control signal SC2.

It is worth mentioning here that the magnetic lock 100 provides the first control signal SC1 according to the first status signal SCP1 from the power supplying connector 10, and uses the third voltage V3 to generate the magnetic attraction force FMA according to the first control signal SC1. The power supplying connector 10 is fixed to the charging port 20 of the electric vehicle EV by the magnetic attraction force FMA. At this time, the power supplying connector 10 cannot be removed. The magnetic attraction circuit 130 also stops generating the magnetic attraction force FMA according to the second control signal SC2. At this time, the power supplying connector 10 is allowed to be removed. The magnetic lock 100 responds to the status signal from the power supplying connector 10 to determine whether to provide the magnetic attraction force FMA. The magnetic lock 100 may prevent the power supplying connector 10 from being removed during the process of charging the electric vehicle EV. In this way, the risk of the charging port 20 being damaged by a charging power EP may be reduced.

In an embodiment, in response to the power supplying connector 10 being connected to the charging port 20 through the magnetic lock 100 and the power supplying connector 10 being able to provide power, the power supplying connector 10 provides the first status signal SCP1. The first status signal SCP1 is a pulse-width modulation (PWM) signal. The pulse peak value of the first status signal SCP1 is lower than a set voltage value (for example, 8 volts, but the disclosure is not limited thereto).

In response to an abnormality in the power supplying connector 10 (for example, an error occurs at the charging pile or there is no power supply), the power supplying connector 10 provides the second status signal SCP2. At this time, the second status signal SCP2 is a DC voltage signal, and the voltage value of the second status signal SCP2 is lower than the set voltage value. In addition, in response to the power supplying connector 10 being connected to the charging port 20 through the magnetic lock 100 and the power supplying connector 10 not providing power, the power supplying connector 10 provides the second status signal SCP2. At this time, the second status signal SCP2 is a PWM signal. The pulse peak value of the second status signal SCP2 is higher than the set voltage value.

Based on the above, the detection circuit 120 may identify the status signals provided by the power supplying connector 10. In response to the status signal being a PWM signal and the pulse peak value of the PWM signal being lower than the set voltage value, the detection circuit 120 determines that the status signal provided by the power supplying connector 10 is the first status signal SCP1 and provides the first control signal SC1. Therefore, the magnetic attraction circuit 130 generates the magnetic attraction force FMA. In response to the status signal being a PWM signal and the pulse peak value of the PWM signal being higher than the set voltage value, the detection circuit 120 determines that the status signal provided by the power supplying connector 10 is the second status signal SCP2 and provides the second control signal SC2. Therefore, the magnetic attraction circuit 130 does not generate the magnetic attraction force FMA. In addition, in response to the status signal being a DC voltage signal and the voltage value of the status signal being lower than the set voltage value, the detection circuit 120 determines that the status signal provided by the power supplying connector 10 is the second status signal SCP2 and provides the second control signal SC2. Therefore, the magnetic attraction circuit 130 does not generate the magnetic attraction force FMA.

In an embodiment, the electric vehicle EV may be a mobile vehicle that may travel with electricity such as an electric car, an electric motorcycle, and an electric bicycle.

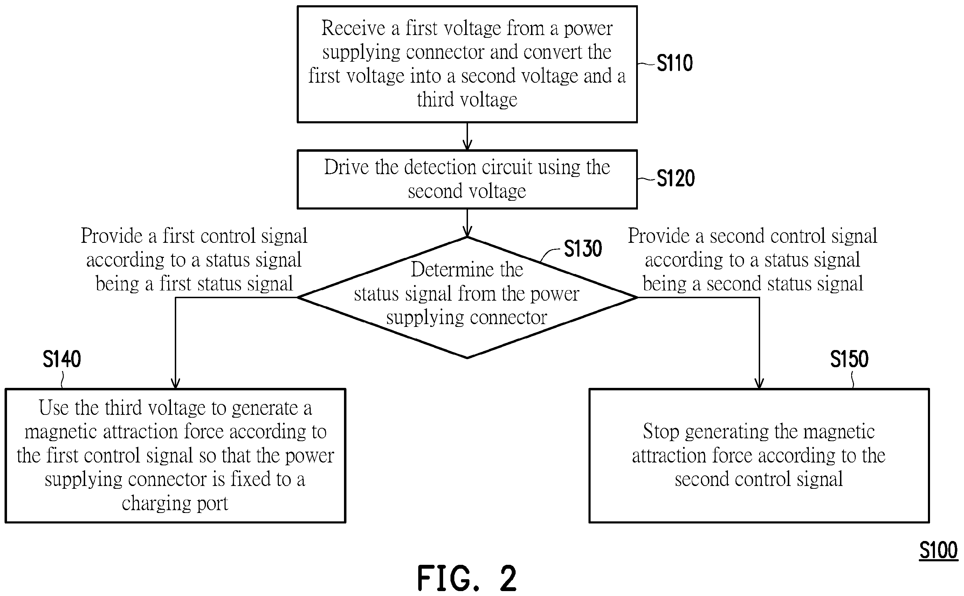

Please refer to FIG. 1 together with FIG. 2. FIG. 2 is a flow chart of an operating method according to an embodiment of the disclosure. In an embodiment, an operating method S100 is used for the magnetic lock 100. The operating method S100 includes Steps S1 10to S150. In Step S110, the voltage conversion circuit 110 receives the first voltage V1 from the power supplying connector 10 and converts the first voltage V1 into the second voltage V2 and the third voltage V3. In Step S120, the voltage conversion circuit 110 uses the second voltage V2 to drive the detection circuit 120. In Step S130, the detection circuit 120 determines whether the status signal from the power supplying connector 10 is the first control signal SC1 or the second control signal SC2. The detection circuit 120 provides the first control signal SC1 according to the first status signal SCP1 from the power supplying connector 10, and provides the second control signal SC2 according to the second status signal SCP2 from the power supplying connector 10.

In Step S140, the magnetic attraction circuit 130 uses the third voltage V3 to generate the magnetic attraction force FMA according to the first control signal SC1 so that the power supplying connector 10 is fixed to the charging port 20 of the electric vehicle EV. In Step S150, the magnetic attraction circuit 130 stops generating the magnetic attraction force FMA according to the second control signal SC2. The implementation details of Steps S110 to S150 have been clearly described in the embodiment in FIG. 1 and will not be repeated here.

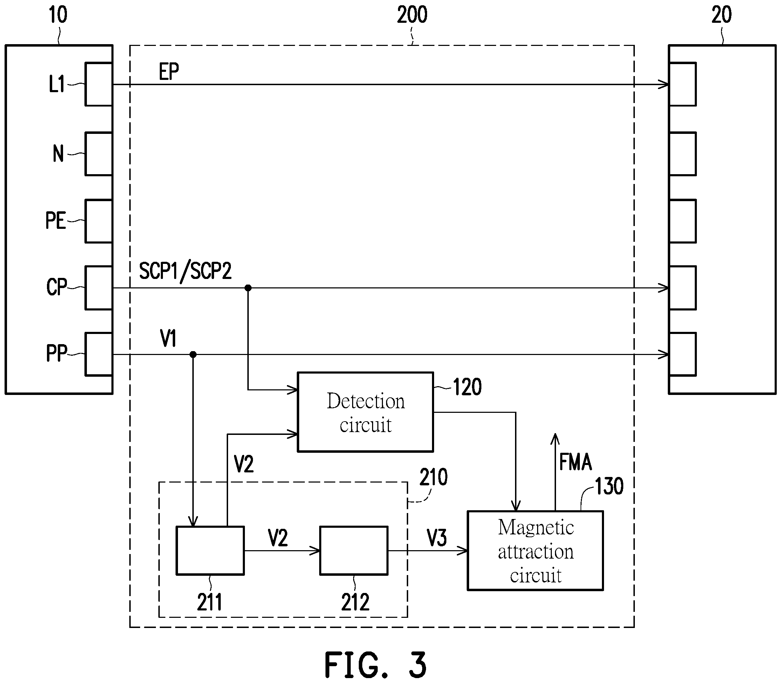

Please also refer to FIG. 3. FIG. 3 is a schematic diagram of the magnetic lock according to an embodiment of the disclosure. In an embodiment, the power supplying connector 10 may be a connector that complies with the SAE J1772 specification, but the disclosure is not limited thereto. The power supplying connector 10 includes a power terminal L1, a neutral terminal N, a control pilot (CP) terminal CP, a proximity pilot (PP) terminal PP, and a ground terminal PE. The power supplying connector 10 may provide the charging power EP through the power terminal L1.

In an embodiment, a magnetic lock 200 includes a voltage conversion circuit 210, the detection circuit 120, and the magnetic attraction circuit 130. The voltage conversion circuit 210 includes a first voltage converter 211 and a second voltage converter 212. The first voltage converter 211 is coupled to the detection circuit 120. The first voltage converter 211 receives the first voltage V1 from the proximity pilot terminal PP of the power supplying connector 10 and converts the first voltage V1 into the second voltage V2. The first voltage converter 211 provides the second voltage V2 to the detection circuit 120 and the second voltage converter 212.

The second voltage converter 212 is coupled to the first voltage converter 211 and the magnetic attraction circuit 130. The second voltage converter 212 converts the second voltage V2 into the third voltage V3. The second voltage converter 212 provides the third voltage V3 to the magnetic attraction circuit 130.

For example, the first voltage V1 from the proximity pilot terminal PP is a DC voltage of 1.5 volts. The second voltage V2 is a DC voltage of 3.3 volts. The third voltage V3 is a DC voltage of 12 volts. The first voltage converter 211 may be any type of DC-DC boost circuit. The second voltage converter 212 may also be any type of DC-DC boost circuit.

In an embodiment, the detection circuit 120 is driven using the second voltage V2. The detection circuit 120 is also coupled to the control pilot terminal CP of the power supplying connector 10. The detection circuit 120 receives the first status signal SCP1 or the second status signal SCP2 from the control pilot terminal CP. In response to receiving the first status signal SCP1, the detection circuit 120 provides the first control signal SC1. In response to receiving the second status signal SCP2, the detection circuit 120 provides the second control signal SC2.

The implementation of the magnetic attraction circuit 130 has been clearly described in the embodiment in FIG. 1 and will not be repeated here.

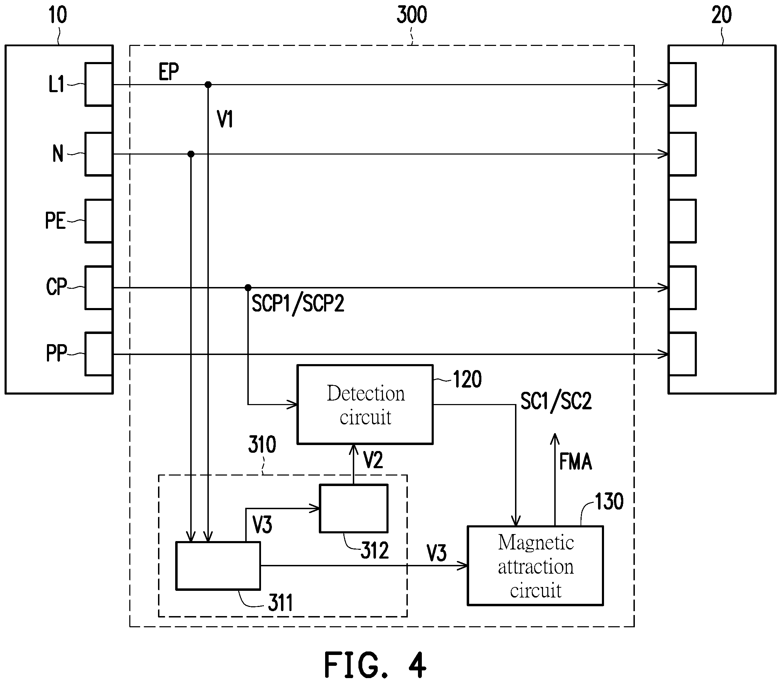

Please also refer to FIG. 4. FIG. 4 is a schematic diagram of the magnetic lock according to an embodiment of the disclosure. In an embodiment, the power supplying connector 10 may be a connector that complies with the SAE J1772 specification. The power supplying connector 10 includes the power terminal L1, the neutral terminal N, the control pilot terminal CP, the proximity pilot terminal PP, and the ground terminal PE. The power supplying connector 10 may provide the charging power EP through the power terminal L1.

In an embodiment, a magnetic lock 300 includes a voltage conversion circuit 310, the detection circuit 120, and the magnetic attraction circuit 130. The voltage conversion circuit 310 includes a first voltage converter 311 and a second voltage converter 312. The first voltage converter 311 is coupled to the magnetic attraction circuit 130. The first voltage converter 311 receives the first voltage V1 from the power terminal L1 of the power supplying connector 10, and converts the first voltage V1 into the third voltage V3.

In an embodiment, the first voltage V1 is a voltage difference signal between the charging power EP and the neutral terminal N. In an embodiment, in response to the charging power EP being an AC signal, the first voltage V1 is an AC voltage signal. In an embodiment, in response to the charging power EP being a DC signal, the first voltage V1 is a DC voltage signal.

The second voltage converter 312 is coupled to the first voltage converter 311 and the detection circuit 120. The second voltage converter 312 converts the third voltage V3 into the second voltage V2.

For example, the first voltage V1 is an AC voltage of 220 volts. The second voltage V2 is a DC voltage of 3.3 volts. The third voltage V3 is a DC voltage of 12 volts. The first voltage converter 311 may be any type of AC-DC step-down circuit. The second voltage converter 312 may also be any type of DC-DC step-down circuit.

The implementation of the detection circuit 120 and the magnetic attraction circuit 130 has been clearly described in the embodiments in FIG. 1 and FIG. 3 and will not be repeated here.

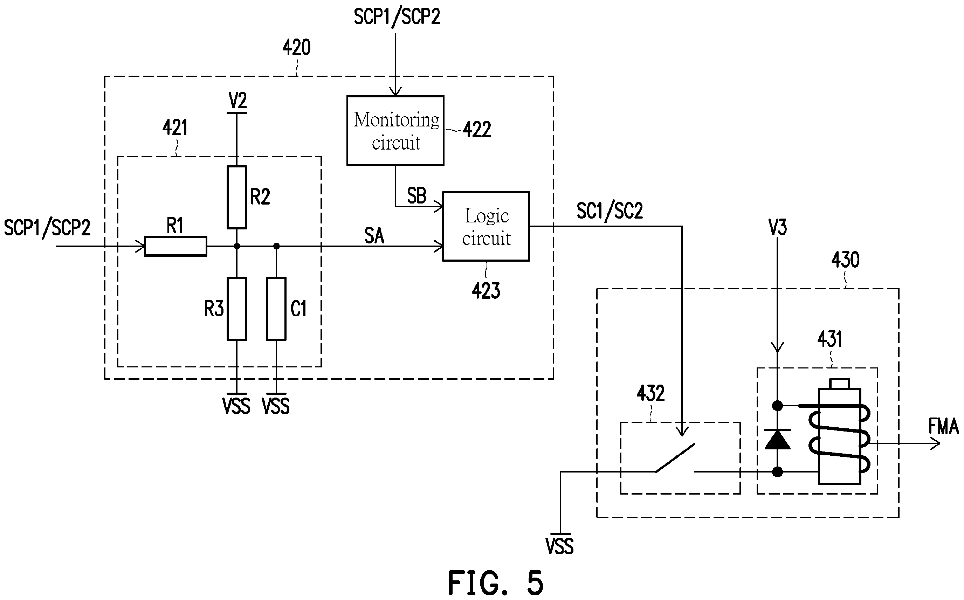

Please also refer to FIG. 5. FIG. 5 is a schematic diagram of a detection circuit and a magnetic attraction circuit according to an embodiment of the disclosure. FIG. 5 shows a detection circuit 420 and a magnetic attraction circuit 430. In an embodiment, the detection circuit 420 includes a voltage stabilizing circuit 421, a monitoring circuit 422, and a logic circuit 423. The voltage stabilizing circuit 421 receives one of the first status signal SCP1 and the second status signal SCP2. The voltage stabilizing circuit 421 converts one of the received first status signal SCP1 and second status signal SCP2 into a first input signal SA.

In an embodiment, the monitoring circuit 422 is driven according to the second voltage V2. The monitoring circuit 422 receives one of the first status signal SCP1 and the second status signal SCP2. The monitoring circuit 422 monitors the waveform of one of the received first status signal SCP1 and second status signal SCP2. In response to one of the received first status signal SCP1 and second status signal SCP2 being a PWM signal, the monitoring circuit 422 provides a second input signal SB having a first logic value (for example, a high logic value "1"). In response to receiving one of the received first status signal SCP1 and second status signal SCP2 not being a PWM signal, the monitoring circuit 422 provides the second input signal SB having a second logic value (for example, a low logic value "0").

In an embodiment, the monitoring circuit 422 may receive one of the first status signal SCP1 and the second status signal SCP2 through the voltage stabilizing circuit 421.

The logic circuit 423 is coupled to the voltage stabilizing circuit 421 and the monitoring circuit 422. The logic circuit 423 provides one of the first control signal SC1 and the second control signal SC2 according to the first input signal SA and the second input signal SB. The logic circuit 423 performs logical operations on the first input signal SA and the second input signal SB to generate one of the first control signal SC1 and the second control signal SC2.

In an embodiment, the logic value of the first input signal SA may be determined by the logic circuit 423. In response to the voltage value of the first input signal SA being higher than the set voltage value, the first input signal SA is determined to have the first logic value (for example, the high logic value "1"). In response to the voltage value of the first input signal SA being lower than or equal to the set voltage value, the first input signal SA is determined to have the second logic value (for example, the low logic value "0").

In an embodiment, the logic circuit 423 outputs the first control signal SC1 in response to the first input signal SA having a second logic value and the second input signal SB having a first logic value. In response to the first input signal SA having the first logic value and the second input signal SB having the first logic value, the logic circuit 423 outputs the second control signal SC2. In response to the first input signal SA having the first logic value and the second input signal SB having the first logic value, the logic circuit 423 outputs the second control signal SC2.

The logic circuit 423 provides one of the first control signal SC1 and the second control signal SC2 as shown in the truth table.

**Truth Table**

| Situation | PWM signal | First input signal SA | Second input signal SB | Output of logic circuit 423 | Whether to provide magnetic attraction force |
|---|---|---|---|---|---|
| A | Yes | "1" | "1" | SC2 | No |
| B | Yes | "0" | "1" | SC1 | Yes |
| C | No | "0" | "0" | SC2 | No |

Situation A is a situation in which the power supplying connector 10 is connected to the charging port 20 through the magnetic lock 100 and the power supplying connector 10 does not provide power. Situation B is a situation where the power supplying connector 10 is connected to the charging port 20 through the magnetic lock 100 and the power supplying connector 10 is able to supply power normally. Situation C is a situation where an abnormality occurs in the power supplying connector 10 (for example, an error occurs at the charging pile or there is no power supply).

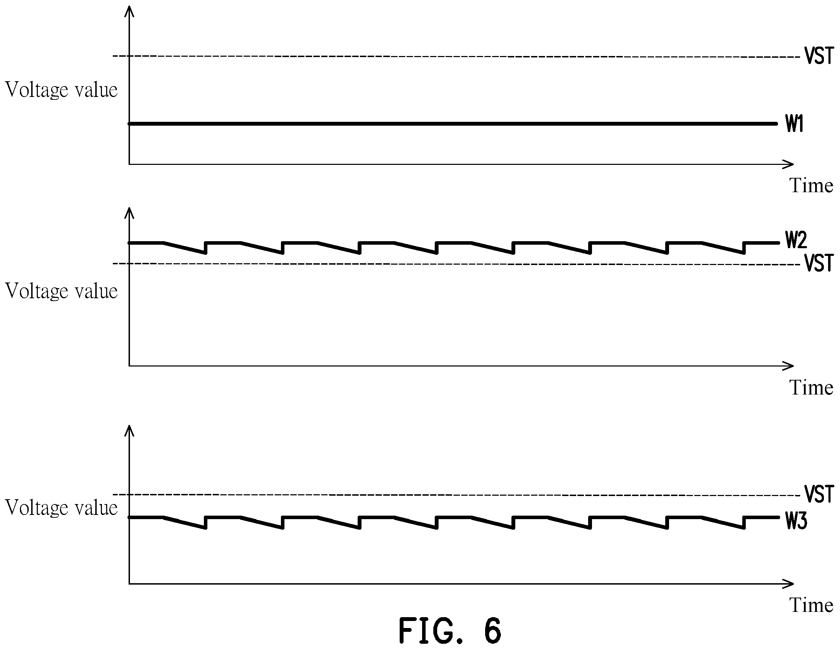

For example, please refer to FIG. 1, FIG. 5, and FIG. 6 at the same time. FIG. 6 is a waveform diagram of a first input signal according to an embodiment of the disclosure. In an embodiment, the voltage stabilizing circuit 421 includes resistors R1 to R3 and a capacitor C1. The first terminal of the resistor R1 receives one of the first status signal SCP1 and the second status signal SCP2. The second terminal of the resistor R1 is coupled to the first input terminal of the logic circuit 423. The second terminal of the resistor R1 is used to output the first input signal SA. The first terminal of the resistor R2 receives the second voltage V2. The second terminal of the resistor R2 is coupled to the second terminal of the resistor R1. The first terminal of the resistor R3 is coupled to the second terminal of the resistor R1. The second terminal of the resistor R3 is coupled to a reference low voltage VSS (for example, ground). The capacitor C1 is coupled between the second terminal of the resistor R1 and the reference low voltage VSS.

For example, the set voltage value VST is 8 volts. In Situation A, the power supplying connector 10 provides the second status signal SCP2. At this time, the second status signal SCP2 is a PWM signal. The pulse peak value of the second status signal SCP2 (for example, 9 volts) is higher than the set voltage value VST. It should be noted that the voltage stabilizing circuit 421 delays the discharge speed of the first input signal SA located at the second terminal of the resistor R1. Therefore, the voltage value of the first input signal SA is still higher than the set voltage value VST, as shown in the waveform W2. Therefore, the first input signal SA is determined to have the first logic value (for example, the high logic value "1"). The second input signal SB also has the first logic value. Therefore, the logic circuit 423 outputs the second control signal SC2. The magnetic attraction force FMA is not generated in Situation A.

For example, in Situation B, the power supplying connector 10 provides the first status signal SCP1. The first status signal SCP1 is the PWM signal. The pulse peak value of the first status signal SCP1 (for example, 3 to 6 volts) is lower than the set voltage value VST. The voltage stabilizing circuit 421 delays the discharge speed of the first input signal SA located at the second terminal of the resistor R1. The voltage value of the first input signal SA is lower than the set voltage value VST, as shown in waveform W3. Therefore, the first input signal SA is determined to have the second logic value (for example, the low logic value "0"). The second input signal SB has the first logic value. Therefore, the logic circuit 423 outputs the first control signal SC1. The magnetic attraction force FMA is generated in Situation B.

In Situation C, the power supplying connector 10 provides the second status signal SCP2. At this time, the second status signal SCP2 is a DC voltage signal, and the voltage value of the second status signal SCP2 (for example, 0 volts or -12 volts) is lower than the set voltage value VST, as shown in the waveform W1. Therefore, the first input signal SA is determined to have the second logic value (for example, the low logic value "0"). The second input signal SB has the second logic value. Therefore, the logic circuit 423 outputs the second control signal SC2. The magnetic attraction force FMA is not generated in Situation C.

Please return to the embodiment in FIG. 5. In an embodiment, the magnetic attraction circuit 430 includes an electromagnet circuit 431 and a switch 432. The first electrode of the electromagnet circuit 431 receives the third voltage V3. The first terminal of the switch 432 is coupled to the second electrode of the electromagnet circuit 431. The second terminal of the switch 432 is coupled to the reference low voltage VSS. The switch 432 is turned on in response to the first control signal SC1. Therefore, the electromagnet circuit 431 generates the magnetic attraction force FMA. The switch 432 is turned off in response to the second control signal SC2.

For example, the switch 432 may be implemented by an N-type field effect transistor, but the disclosure is not limited thereto. The first control signal SC1 has a high logic value. The second control signal SC2 has a low logic value. Therefore, the logic circuit 423 may be implemented by an exclusive OR (XOR) gate, but the disclosure is not limited thereto. According to the above truth table, in situations A and C, the switch 432 is turned off in response to the second control signal SC2. The electromagnet circuit 431 does not generate the magnetic attraction force FMA. In Situation B, the switch 432 is turned on in response to the first control signal SC1. The electromagnet circuit 431 generates the magnetic attraction force FMA.

For example, in response to the switch 432 being turned on, the operating voltage of the electromagnet circuit 431 is the third voltage V3 (that is, 12 volts), and the operating current of the electromagnet circuit 431 is 0.5 amps. Therefore, the magnetic attraction force FMA may be in a range of 110 kg to 270 kg. Therefore, when the magnetic attraction force FMA is generated, the user cannot easily remove the power supplying connector 10 from the charging port 20.

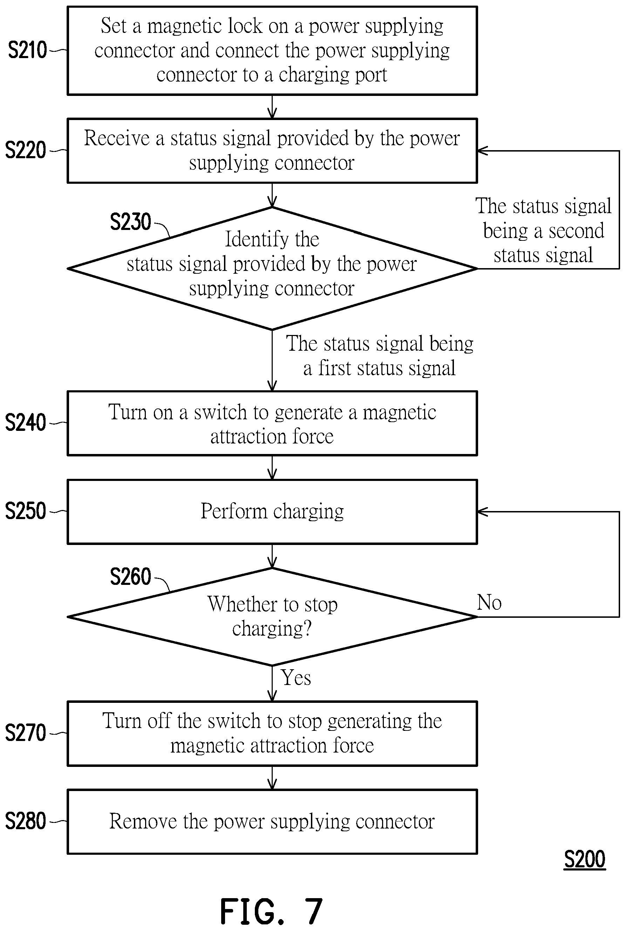

Please refer to FIG. 1, FIG. 6, and FIG. 7 at the same time. FIG. 7 is a flow chart of operations according to an embodiment of the disclosure. In an embodiment, an operation process S200 includes Steps S210 to S280. In Step S210, the user sets the magnetic lock 100 on the power supplying connector 10 and connects the power supplying connector 10 to the charging port 20. In Step S220, the detection circuit 420 receives the status signal provided by the power supplying connector 10.

In Step S230, the detection circuit 420 identifies the status signal provided by the power supplying connector 10. In response to the detection circuit 420 identifying that the status signal is the second status signal SCP2 (for example, Situations A, C), the operation process S200 returns to the operation of Step S220. On the other hand, in response to the detection circuit 420 identifying that the status signal is the first status signal SCP1 (for example, Situation B), the detection circuit 420 outputs the first control signal SC1. The switch 432 is turned on in response to the first control signal SC1 in Step S240. Therefore, the electromagnet circuit 431 generates the magnetic attraction force FMA in Step S240. Starting from Step S240, the power supplying connector 10 cannot be removed. In Step S250, the charging pile charges the electric vehicle EV through the power supplying connector 10.

In Step S260, it is determined whether the charging of the electric vehicle EV is stopped. For example, when the battery of the electric vehicle EV is in a fully charged state, the charging is stopped. For example, the user operates the power supplying connector 10 or the charging pile to stop charging. When the charging is not stopped, the operation flow S200 returns to the operation of Step S250. On the other hand, when the charging is stopped (for example, Situation A), the detection circuit 420 outputs the second control signal SC2. The switch 432 is turned off in response to the second control signal SC2 in Step S270. The electromagnet circuit 431 stops generating the magnetic attraction force FMA in Step S270. Therefore, the power supplying connector 10 is allowed to be removed in Step S270.

In summary, the magnetic lock according to the disclosure provides the first control signal according to the first status signal from the power supplying connector, and generates the magnetic attraction force according to the first control signal using the third voltage. Therefore, the power supplying connector may be fixed to the charging port of the electric vehicle by the magnetic attraction force provided by the magnetic lock. At this time, the power supplying connector cannot be removed. The magnetic attraction circuit also stops generating the magnetic attraction force according to the second control signal. At this time, the power supplying connector is allowed to be removed. According to the disclosure, the magnetic lock responds to the status signals from the power supplying connector to determine whether to provide the magnetic attraction force. The magnetic lock prevents the power supplying connector from being removed during the process of charging the electric vehicle EV. In this way, the risk of the charging port being damaged by the charging power may be reduced.

Although the disclosure has been disclosed above through embodiments, the embodiments are not intended to limit the disclosure. Persons with ordinary knowledge in the relevant technical field may make some changes and modifications without departing from the spirit and scope of the disclosure. Therefore, the protection scope of the disclosure shall be determined by the appended claims.

## Claims

1. A magnetic lock (100, 200, 300) for charging an electric vehicle (EV), comprising:
a voltage conversion circuit (110, 210, 310), configured to receive a first voltage (V1) from a power supplying connector (10) and convert the first voltage (V1) into a second voltage (V2) and a third voltage (V3);
a detection circuit (120, 420), coupled to the voltage conversion circuit (110, 210, 310) and the power supplying connector (10) and configured to be driven according to the second voltage (V2), provide a first control signal (SC1) according to a first status signal (SCP1) from the power supplying connector (10), and provide a second control signal (SC2) according to a second status signal (SCP2) from the power supplying connector (10); and
a magnetic attraction circuit (130, 430), coupled to the voltage conversion circuit (110, 210, 310) and the detection circuit (120, 420) and configured to use the third voltage (V3) to generate a magnetic attraction force (FMA) according to the first control signal (SC1) and to stop generating the magnetic attraction force (FMA) according to the second control signal (SC2),
wherein the power supplying connector (10) is fixed to a charging port (20) of the electric vehicle (EV) by the magnetic attraction force (FMA).

2. The magnetic lock (100, 200, 300) as claimed in claim 1, wherein
in response to the power supplying connector (10) being connected to the charging port (20) through the magnetic lock (100, 200, 300) and the power supplying connector (10) providing power, the power supplying connector (10) provides the first status signal (SCP1), and
the first status signal (SCP1) is a pulse-width modulation signal, and a pulse peak value of the first status signal (SCP1) is lower than a set voltage value (VST).

3. The magnetic lock (100, 200, 300) as claimed in claim 1, wherein
in response to an abnormality occurring in the power supplying connector (10), the power supplying connector (10) provides the second status signal (SCP2), and
the second status signal (SCP2) is a DC voltage signal, and a voltage value of the second status signal (SCP2) is lower than a set voltage value (VST).

4. The magnetic lock (100, 200, 300) as claimed in claim 1, wherein
in response to the power supplying connector (10) being connected to the charging port (20) through the magnetic lock (100, 200, 300) and the power supplying connector (10) not providing power, the power supplying connector (10) provides the second status signal (SCP2), and
the second status signal (SCP2) is a pulse-width modulation signal, and a pulse peak value of the second status signal (SCP2) is higher than a set voltage value (VST).

5. The magnetic lock (100, 200, 300) as claimed in claim 1, wherein the voltage conversion circuit (210) comprises:
a first voltage converter (211), coupled to the detection circuit (120) and configured to receive the first voltage (V1) from a proximity pilot terminal (PP) of the power supplying connector (10) and convert the first voltage (V1) into the second voltage (V2); and
a second voltage converter (212), coupled to the first voltage converter (211) and the magnetic attraction circuit (130) and configured to convert the second voltage (V2) into the third voltage (V3).

6. The magnetic lock (100, 200, 300) as claimed in claim 1, wherein the voltage conversion circuit (310) comprises:
a first voltage converter (311) coupled to the magnetic attraction circuit (130) and configured to receive the first voltage (V1) from a power terminal (L1) of the power supplying connector (10) and convert the first voltage (V1) into the third voltage (V3); and
a second voltage converter (312) coupled to the first voltage converter (311) and the detection circuit (120, 420) and configured to convert the third voltage (V3) into the second voltage (V2).

7. The magnetic lock (100, 200, 300) as claimed in claim 1, wherein the detection circuit (420) comprises:
a voltage stabilizing circuit (421), configured to receive one of the first status signal (SCP1) and the second status signal (SCP2) and convert one of the received first status signal (SCP1) and the second status signal (SCP2) into a first input signal (SA), wherein in response to a voltage value being higher than a set voltage value (VST), the first input signal (SA) has a first logic value, and in response to the voltage value being lower than or equal to the set voltage value (VST), the first input signal (SA) has a second logic value.
a monitoring circuit (422) configured to receive one of the first status signal (SCP1) and the second status signal (SCP2), wherein in response to one of the received first status signal (SCP1) and the second status signal (SCP2) being a pulse-width modulation signal, a second input signal (SB) having the first logic value is provided, and in response to one of the received first status signal (SCP1) and the second status signal (SCP2) not being a pulse-width modulation signal, a second input signal (SB) having the second logic value is provided; and
a logic circuit (423) coupled to the voltage stabilizing circuit (421) and the monitoring circuit (422) and configured to output the first control signal (SC1) in response to the first input signal (SA) having the second logic value and the second input signal (SB) having the first logic value.

8. The magnetic lock (100, 200, 300) as claimed in claim 1, wherein the magnetic attraction circuit (430) comprises:
an electromagnet circuit (431), wherein a first electrode of the electromagnet circuit (431) receives the third voltage (V3); and
a switch (432), wherein a first terminal of the switch (432) is coupled to a second electrode of the electromagnet circuit (431), and a second terminal of the switch (432) is coupled to a reference low voltage,
wherein the switch (432) is turned on in response to the first control signal (SC1), so that the electromagnet circuit (431) generates the magnetic attraction force (FMA), and
the switch (432) is turned off in response to the second control signal (SC2).

9. An operating method (S110) of a magnetic lock (100, 200, 300) for charging an electric vehicle (EV), wherein the magnetic lock (100, 200, 300) comprises a detection circuit (120, 420) and a magnetic attraction circuit (130, 430), and the operating method (5110) comprises:
receiving a first voltage (V1) from a power supplying connector (10) and converting the first voltage (V1) into a second voltage (V2) and a third voltage (V3); (5110)
driving the detection circuit (120, 420) according to the second voltage (V2); (S120)
providing a first control signal (SC1) according to a first status signal (SCP1) from the power supplying connector (10) by the detection circuit (120, 420) and providing a second control signal (SC2) according to a second status signal (SCP2) from the power supplying connector (10); (S130)
using the third voltage (V3) to generate a magnetic attraction force (FMA) according to the first control signal (SC1) by the magnetic attraction circuit (130, 430) so that the power supplying connector (10) is fixed to a charging port (20) of the electric vehicle (EV); (S140) and
stopping generating the magnetic attraction force (FMA) according to the second control signal (SC2) by the magnetic attraction circuit (130, 430). (S150)

10. The operating method (S110) as claimed in claim 9, further comprising:
providing the first status signal (SCP1) by the power supplying connector (10) in response to the power supplying connector (10) being connected to the charging port (20) through the magnetic lock (100, 200, 300) and the power supplying connector (10) providing power,
wherein the first status signal (SCP1) is a pulse-width modulation signal, and a pulse peak value of the first status signal (SCP1) is lower than a set voltage value (VST).

11. The operating method (S110) as claimed in claim 9, further comprising:
providing the second status signal (SCP2) by the power supplying connector (10) in response to an abnormality occurring in the power supplying connector (10),
wherein the second status signal (SCP2) is a DC voltage signal, and a voltage value of the second status signal (SCP2) is lower than a set voltage value (VST).

12. The operating method (S110) as claimed in claim 9, further comprising:
providing the second status signal (SCP2) by the power supplying connector (10) in response to the power supplying connector (10) being connected to the charging port (20) through the magnetic lock (100, 200, 300) and the power supplying connector (10) not providing power,
wherein the second status signal (SCP2) is a pulse-width modulation signal, and a pulse peak value of the second status signal (SCP2) is higher than a set voltage value (VST).

13. The operating method (5110) as claimed in claim 9, wherein receiving the first voltage (V1) from the power supplying connector (10) and converting the first voltage (V1) into the second voltage (V2) and the third voltage (V3) comprises:
receiving the first voltage (V1) from a proximity pilot terminal (PP) of the power supplying connector (10) and converting the first voltage (V1) into the second voltage (V2); and
converting the second voltage (V2) into the third voltage (V3).

14. The operating method (5110) as claimed in claim 9, wherein receiving the first voltage (V1) from the power supplying connector (10) and converting the first voltage (V1) into the second voltage (V2) and the third voltage (V3) comprises:
receiving the first voltage (V1) from a power terminal (L1) of the power supplying connector (10) and converting the first voltage (V1) into the third voltage (V3); and
converting the third voltage (V3) into the second voltage (V2).

15. The operating method (S110) as claimed in claim 9, wherein providing the first control signal (SC1) according to the first status signal (SCP1) from the power supplying connector (10) by the detection circuit (120, 420) and providing the second control signal (SC2) according to the second status signal (SCP2) from the power supplying connector (10) comprises:
converting one of the received first status signal (SCP1) and the second status signal (SCP2) into a first input signal (SA);
having a first logic value in response to a voltage value of the first input signal (SA) being higher than a set voltage value (VST);
having a second logic value in response to the voltage value of the first input signal (SA) being lower than or equal to the set voltage value (VST);
providing a second input signal (SB) having the first logic value in response to one of the received first status signal (SCP1) and the second status signal (SCP2) being a pulse-width modulation signal; and
providing a second input signal (SB) having the second logic value in response to one of the received first status signal (SCP1) and the second status signal (SCP2) not being a pulse-width modulation signal.

## Amended claims

### Amended claims in accordance with Rule 137(2) EPC.

1. A magnetic lock (100, 200, 300) for charging an electric vehicle, **characterized by** comprising:
a voltage conversion circuit (110, 210, 310), configured to receive a first voltage (V1) from a power supplying connector (10) and convert the first voltage (V1) into a second voltage (V2) and a third voltage (V3);
a detection circuit (120, 420), electrically connected to the voltage conversion circuit (110, 210, 310) and the power supplying connector (10) and configured to be powered by the second voltage (V2), trigger a first control signal (SC1) according to a first status signal (SCP1) from the power supplying connector (10), and provide a second control signal (SC2) according to a second status signal (SCP2) from the power supplying connector (10), wherein the first status signal (SCP1) indicates that the power supplying connector (10) is connected to the magnetic lock (100, 200, 300) and the power supplying connector (10) is able to supply power normally, wherein the second status signal (SCP2) indicates that the power supplying connector (10) is in an abnormal condition or the charging is complete; and
a magnetic attraction circuit (130, 430), electrically connected to the voltage conversion circuit (110, 210, 310) and the detection circuit (120, 420) and configured to use the third voltage (V3) to generate a magnetic attraction force when receiving the first control signal (SC1) and to stop generating the magnetic attraction force when receiving the second control signal (SC2),
wherein the power supplying connector (10) is fixed to a charging port (20) of the electric vehicle by the magnetic attraction force.

2. The magnetic lock (100, 200, 300) as claimed in claim 1, wherein
in response to the power supplying connector (10) being connected to the charging port (20) through the magnetic lock (100, 200, 300) and the power supplying connector (10) providing power, the power supplying connector (10) provides the first status signal (SCP1), and
the first status signal (SCP1) is a pulse-width modulation signal, and a pulse peak value of the first status signal (SCP1) is lower than a set voltage value (VST).

3. The magnetic lock (100, 200, 300) as claimed in claim 1, wherein
in response to an abnormality occurring in the power supplying connector (10), the power supplying connector (10) provides the second status signal (SCP2), and
the second status signal (SCP2) is a DC voltage signal, and a voltage value of the second status signal (SCP2) is lower than a set voltage value (VST).

4. The magnetic lock (100, 200, 300) as claimed in claim 1, wherein
in response to the power supplying connector (10) being connected to the charging port (20) through the magnetic lock (100, 200, 300) and the power supplying connector (10) not providing power, the power supplying connector (10) provides the second status signal (SCP2), and
the second status signal (SCP2) is a pulse-width modulation signal, and a pulse peak value of the second status signal (SCP2) is higher than a set voltage value (VST).

5. The magnetic lock (100, 200, 300) as claimed in claim 1, wherein the voltage conversion circuit (210) comprises:
a first voltage converter (211), electrically connected to the detection circuit (120) and configured to receive the first voltage (V1) from a proximity pilot terminal (PP) of the power supplying connector (10) and convert the first voltage (V1) into the second voltage (V2); and
a second voltage converter (212), electrically connected to the first voltage converter (211) and the magnetic attraction circuit (130) and configured to convert the second voltage (V2) into the third voltage (V3).

6. The magnetic lock (100, 200, 300) as claimed in claim 1, wherein the voltage conversion circuit (310) comprises:
a first voltage converter (311), electrically connected to the magnetic attraction circuit (130) and configured to receive the first voltage (V1) from a power terminal (L1) of the power supplying connector (10) and convert the first voltage (V1) into the third voltage (V3); and
a second voltage converter (312), electrically connected to the first voltage converter (311) and the detection circuit (120, 420) and configured to convert the third voltage (V3) into the second voltage (V2).

7. The magnetic lock (100, 200, 300) as claimed in claim 1, wherein the detection circuit (420) comprises:
a voltage stabilizing circuit (421), configured to receive one of the first status signal (SCP1) and the second status signal (SCP2) and convert one of the received first status signal (SCP1) and the second status signal (SCP2) into a first input signal (SA), wherein in response to a voltage value being higher than a set voltage value (VST), the first input signal (SA) has a first logic value, and in response to the voltage value being lower than or equal to the set voltage value (VST), the first input signal (SA) has a second logic value.
a monitoring circuit (422), configured to receive one of the first status signal (SCP1) and the second status signal (SCP2), wherein in response to one of the received first status signal (SCP1) and the second status signal (SCP2) being a pulse-width modulation signal, a second input signal (SB) having the first logic value is provided, and in response to one of the received first status signal (SCP1) and the second status signal (SCP2) not being a pulse-width modulation signal, a second input signal (SB) having the second logic value is provided; and
a logic circuit (423), electrically connected to the voltage stabilizing circuit (421) and the monitoring circuit (422) and configured to output the first control signal (SC1) in response to the first input signal (SA) having the second logic value and the second input signal (SB) having the first logic value.

8. The magnetic lock (100, 200, 300) as claimed in claim 1, wherein the magnetic attraction circuit (430) comprises:
an electromagnet circuit (431), wherein a first electrode of the electromagnet circuit (431) receives the third voltage (V3); and
a switch (432), wherein a first terminal of the switch (432) is electrically connected to a second electrode of the electromagnet circuit (431), and a second terminal of the switch (432) is electrically connected to a reference low voltage,
wherein the switch (432) is turned on in response to the first control signal (SC1), so that the electromagnet circuit (431) generates the magnetic attraction force, and
the switch (432) is turned off in response to the second control signal (SC2).

9. An operating method (S110) of a magnetic lock (100, 200, 300) for charging an electric vehicle, wherein the magnetic lock (100, 200, 300) comprises a detection circuit (120, 420) and a magnetic attraction circuit (130, 430), and
Wherein the operating method (S110) is **characterized by** comprising:
receiving a first voltage (V1) from a power supplying connector (10) and converting the first voltage (V1) into a second voltage (V2) and a third voltage (V3); (S110)
powering the detection circuit (120, 420) according to the second voltage (V2); (S120)
triggering a first control signal (SC1) according to a first status signal (SCP1) from the power supplying connector (10) by the detection circuit (120, 420) and triggering a second control signal (SC2) according to a second status signal (SCP2) from the power supplying connector (10), wherein the first status signal (SCP1) indicates that the power supplying connector (10) is connected to the magnetic lock (100, 200, 300) and the power supplying connector (10) is able to supply power normally, wherein the second status signal (SCP2) indicates that the power supplying connector (10) is in an abnormal condition or the charging is complete; (S130)
using the third voltage (V3) to generate a magnetic attraction force when receiving the first control signal (SC1) by the magnetic attraction circuit (130, 430) so that the power supplying connector (10) is fixed to a charging port (20) of the electric vehicle; (S140) and
stopping generating the magnetic attraction force when receiving the second control signal (SC2) by the magnetic attraction circuit (130, 430). (S150)

10. The operating method (S110) as claimed in claim 9, further comprising:
providing the first status signal (SCP1) by the power supplying connector (10) in response to the power supplying connector (10) being connected to the charging port (20) through the magnetic lock (100, 200, 300) and the power supplying connector (10) providing power,
wherein the first status signal (SCP1) is a pulse-width modulation signal, and a pulse peak value of the first status signal (SCP1) is lower than a set voltage value (VST).

11. The operating method (S110) as claimed in claim 9, further comprising:
providing the second status signal (SCP2) by the power supplying connector (10) in response to an abnormality occurring in the power supplying connector (10),
wherein the second status signal (SCP2) is a DC voltage signal, and a voltage value of the second status signal (SCP2) is lower than a set voltage value (VST).

12. The operating method (S110) as claimed in claim 9, further comprising:
providing the second status signal (SCP2) by the power supplying connector (10) in response to the power supplying connector (10) being connected to the charging port (20) through the magnetic lock (100, 200, 300) and the power supplying connector (10) not providing power,
wherein the second status signal (SCP2) is a pulse-width modulation signal, and a pulse peak value of the second status signal (SCP2) is higher than a set voltage value (VST).

13. The operating method (S110) as claimed in claim 9, wherein receiving the first voltage (V1) from the power supplying connector (10) and converting the first voltage (V1) into the second voltage (V2) and the third voltage (V3) comprises:
receiving the first voltage (V1) from a proximity pilot terminal (PP) of the power supplying connector (10) and converting the first voltage (V1) into the second voltage (V2); and
converting the second voltage (V2) into the third voltage (V3).

14. The operating method (S110) as claimed in claim 9, wherein receiving the first voltage (V1) from the power supplying connector (10) and converting the first voltage (V1) into the second voltage (V2) and the third voltage (V3) comprises:
receiving the first voltage (V1) from a power terminal (L1) of the power supplying connector (10) and converting the first voltage (V1) into the third voltage (V3); and
converting the third voltage (V3) into the second voltage (V2).

15. The operating method (S110) as claimed in claim 9, wherein triggering the first control signal (SC1) according to the first status signal (SCP1) from the power supplying connector (10) by the detection circuit (120, 420) and triggering the second control signal (SC2) according to the second status signal (SCP2) from the power supplying connector (10) comprises:
converting one of the received first status signal (SCP1) and the second status signal (SCP2) into a first input signal (SA);
having a first logic value in response to a voltage value of the first input signal (SA) being higher than a set voltage value (VST);
having a second logic value in response to the voltage value of the first input signal (SA) being lower than or equal to the set voltage value (VST);
providing a second input signal (SB) having the first logic value in response to one of the received first status signal (SCP1) and the second status signal (SCP2) being a pulse-width modulation signal; and
providing a second input signal (SB) having the second logic value in response to one of the received first status signal (SCP1) and the second status signal (SCP2) not being a pulse-width modulation signal.
